# EUROPEAN PATENT APPLICATION

(11) **EP 4 726 569 A1**
(43) Date of publication of application: **15.04.2026**
(21) Application number: 24838321.8
(22) Date of filing: 07.03.2024
(51) Int. Cl.: G06F 16/2458

(54) **DATA DOWNSAMPLING METHOD AND APPARATUS**

(30) Priority: 08.07.2023 CN 202310833432; 18.09.2023 CN 202311203699
(71) Applicant: Huawei Cloud Computing Technologies Co., Ltd., Guiyang, Guizhou, 550025 (CN)
(72) Inventor: CONG, Guanglin, Guiyang, Guizhou 550025 (CN); ZHOU, Yijian, Guiyang, Guizhou 550025 (CN); LONG, Yuxiang, Guiyang, Guizhou 550025 (CN)
(74) Representative: Isarpatent
(86) International application number: PCT/CN2024/080489
(87) International publication number: WO 2025/011060

(57) **Abstract**

This application relates to the database field, and provides a data downsampling method. The method includes: receiving downsampling policies at a plurality of levels that are defined by a user, where a downsampling policy at each level indicates to downsample data in the plurality of time shards based on a defined sampling time interval after raw data is stored in a plurality of time shards and a defined time interval has elapsed; determining a first downsampling policy in the downsampling policies at the plurality of levels based on a first time interval that has elapsed after first raw data is stored in a first time shard, where the longer first time interval indicates a longer sampling time interval of the first downsampling policy; obtaining first data currently stored in the first time shard; and downsampling the first data according to the first downsampling policy, to obtain second data. The user may set a downsampling policy based on a requirement of the user, to improve downsampling applicability.

## Description

This application claims priority to Chinese Patent Application No. 202311203699.7, filed with the China National Intellectual Property Administration on September 18, 2023 and entitled "DATA DOWNSAMPLING METHOD AND APPARATUS", which is incorporated herein by reference in its entirety.

In addition, this application claims priority to Chinese Patent Application No. 202310833432.X, filed with the China National Intellectual Property Administration on July 8, 2023 and entitled "DATA DOWNSAMPLING METHOD AND APPARATUS, AND COMPUTING DEVICE CLUSTER", which is incorporated herein by reference in its entirety.

### TECHNICAL FIELD

This application relates to the database field, and more specifically, to a data downsampling method and apparatus.

### BACKGROUND

In a scenario, for example, development operation (development operation, DevOps) or an IoT (internet of things, IoT), a user is more sensitive to recent data and tends to perform a complete data query only on the recent data. For old data, the user usually queries a data trend, that is, queries sampled data. Therefore, the old data may be processed in a downsampling (downsampling) manner. Through downsampling, data points within a specific time interval can be aggregated into one value or one group of values according to a specific rule. Downsampling can reduce an overall amount of stored data, to further reduce computing pressure of storage and a query.

Storing data in a database may also be referred to as "writing data to a disk". Currently, downsampling is usually performed before data is written to a disk. The data is stored in a memory, and data obtained through downsampling is written to the disk after a specific time period. This leads to high memory costs.

Therefore, how to reduce memory costs during downsampling is an urgent problem to be resolved.

### SUMMARY

This application provides a data downsampling method, to reduce memory costs during downsampling.

According to a first aspect, a data downsampling method is provided. The method is applied to a database, the database includes a plurality of time shards, the plurality of time shards are used for storing data within different time periods, and the method includes: receiving downsampling policies at a plurality of levels that are defined by a user, where a downsampling policy at each level indicates to downsample data in the plurality of time shards based on a defined sampling time interval after raw data is stored in the plurality of time shards and a defined time interval has elapsed; determining a first downsampling policy in the downsampling policies at the plurality of levels based on a first time interval that has elapsed after first raw data is stored in a first time shard, where the longer first time interval indicates a longer sampling time interval of the first downsampling policy, and the first time shard is any one of the plurality of time shards; obtaining first data currently stored in the first time shard, where the first data is the first raw data or data obtained by downsampling the first raw data at least once; and downsampling the first data according to the first downsampling policy, to obtain second data.

In this embodiment of this application, the user may set a downsampling policy based on a requirement of the user, to improve downsampling applicability. In addition, the user only needs to give an instruction, and maintenance and scheduling are automatically performed in a background, to reduce operation and maintenance costs of the user. In this way, when downsampling policies at more levels need to be set, according to the data downsampling method provided in this embodiment of this application, a database storage service can be conveniently constructed. In addition, in the foregoing solution, downsampling is performed after data is written to a database, to save memory storage space. In addition, in the foregoing solution, multi-level downsampling may be performed, that is, further downsampling is performed based on data obtained through downsampling.

With reference to the first aspect, in some implementations of the first aspect, the method further includes: storing the second data in the first time shard, and deleting the first data.

According to the data downsampling method provided in this embodiment of this application, multi-level downsampling may be performed, and data that is not downsampled is replaced with data obtained through downsampling. Data obtained through different levels of downsampling may be stored in a same database. This greatly saves disk storage space while ensuring that the data obtained through downsampling can reconstruct a change trend of raw data, to increase a processing speed of the database.

With reference to the first aspect, in some implementations of the first aspect, before the receiving the downsampling policies at the plurality of levels that are defined by the user, the method further includes: receiving the first raw data, and generating a timestamp of the first raw data; and storing the first raw data in the first time shard based on the timestamp.

According to the data downsampling method provided in this embodiment of this application, downsampling can be performed after data is written to a database, to save memory storage space.

With reference to the first aspect, in some implementations of the first aspect, the downsampling the first data according to the first downsampling policy, to obtain the second data includes: dividing the first data into a plurality of groups based on the sampling time interval of the first downsampling policy; and aggregating data in each of the plurality of groups according to an aggregation rule of the first downsampling policy, to obtain the second data.

According to the foregoing solution, the first data is grouped and aggregated by using the first downsampling policy, so that the first data is downsampled, and disk storage space is released, to increase a processing speed of the database.

With reference to the first aspect, in some implementations of the first aspect, the second data includes at least one of a minimum value, a maximum value, a sum, a quantity of data points, an average value, a value of an earliest input data point, or a value of a latest input data point of data in each group in the first data.

According to the foregoing solution, the first data is downsampled by using the first downsampling policy, to obtain the second data. The second data includes at least one aggregated value. Therefore, the second data can reflect a change trend of the raw data, so that the change trend of the raw data can be reconstructed while saving disk storage space, to improve downsampling accuracy.

With reference to the first aspect, in some implementations of the first aspect, the method further includes: receiving a query instruction, where the query instruction is used for querying a first aggregation result obtained by aggregating second raw data in a second time shard according to a first aggregation rule, the second time shard is any one of the plurality of time shards, and data currently stored in the second time shard is obtained by aggregating the second raw data according to at least one aggregation rule; determining a second aggregation rule according to the first aggregation rule and the at least one aggregation rule; and aggregating, according to the second aggregation rule, the data currently stored in the second time shard, to obtain the first aggregation result.

According to a query statement rewriting solution provided in this application, simpler processing may be performed on data obtained through downsampling, to save computing resources.

According to a second aspect, an embodiment of this application provides a data downsampling apparatus. The data downsampling apparatus includes a module configured to implement any one of the first aspect or the possible implementations of the first aspect.

According to a third aspect, a computing device cluster is provided. The computing device cluster includes at least one computing device. Each computing device includes a processor and a storage. The processor of the at least one computing device is configured to execute instructions stored in the storage of the at least one computing device, to cause the computing device cluster to perform the data downsampling method according to any one of the first aspect or the possible implementations of the first aspect.

According to a fourth aspect, a computer program product including instructions is provided. When the instructions are run by a computing device cluster, the computing device cluster is caused to perform the data downsampling method according to any one of the first aspect or the possible implementations of the first aspect.

According to a fifth aspect, a computer-readable storage medium is provided. The computer-readable storage medium includes computer program instructions. When the computer program instructions are executed by a computing device cluster, the computing device cluster performs the data downsampling method according to any one of the first aspect or the possible implementations of the first aspect.

### BRIEF DESCRIPTION OF DRAWINGS

FIG. 1 is a diagram of a system based on a cloud server system according to an embodiment of this application;
FIG. 2 is a schematic flowchart of a data downsampling method according to an embodiment of this application;
FIG. 3 is a diagram of data aggregation according to an embodiment of this application;
FIG. 4 is a block diagram of a database according to an embodiment of this application;
FIG. 5 is a block diagram of a data downsampling apparatus according to an embodiment of this application;
FIG. 6 is a diagram of a data downsampling method according to an embodiment of this application;
FIG. 7 is a diagram of first data and second data according to an embodiment of this application;
FIG. 8 is a diagram of data downsampling and a query according to an embodiment of this application;
FIG. 9 is a diagram of an architecture of a computing device according to an embodiment of this application;
FIG. 10 is a diagram of an architecture of a computing device cluster according to an embodiment of this application; and
FIG. 11 is a diagram in which two computing devices are connected through a network according to an embodiment of this application.

### DESCRIPTION OF EMBODIMENTS

The following describes technical solutions of this application with reference to the accompanying drawings.

All aspects, embodiments, or features are presented in this application by describing a system that may include a plurality of devices, components, and modules, and the like. It should be appreciated and understood that each system may include another device, component, and module, and the like, and/or may not include all devices, components, and modules, and the like discussed with reference to the accompanying drawings. In addition, a combination of these solutions may be used.

In addition, in embodiments of this application, terms such as "example" and "for example" are used for representing giving an example, an illustration, or descriptions. Any embodiment or design scheme described as an "example" in this application should not be explained as being more preferred or having more advantages than another embodiment or design scheme. Exactly, use of the term "example" is intended to present a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

Reference to "one embodiment", "some embodiments", or the like described in this specification means that a specific feature, structure, or characteristic described with reference to the embodiment is included in one or more embodiments of this application. Therefore, statements "in one embodiment", "in some embodiments", "in some other embodiments", "in some additional embodiments", and the like described in different parts in this specification do not necessarily refer to a same embodiment, but mean "one or more but not all embodiments", unless otherwise specifically emphasized in other manners. Terms "include", "comprise", "have", and their variants all mean "include but are not limited to", unless otherwise specifically emphasized in another manner.

For ease of understanding, the following describes some terms that may be used in this application.

A time series (time series) indicates a change of an indicator over time. A combination of a measurement, a tag, and a field forms a time series.

A measurement (measurement) is conceptually similar to a table (table), and represents a set of data of a same type. For example, a measurement may be established for an environmental sensor, and the measurement is used for storing all monitoring data of the environmental sensor.

A tag (tag) may describe a feature of a data point and does not change over time. For example, information such as an identifier of an environmental sensor and an area in which the environmental sensor is located may be used as the tag.

A field (field) is conceptually similar to a column (column). The field may describe a measurement indicator of data, and usually changes over time. For example, data such as a temperature, humidity, and pressure detected by an environmental sensor may be referred to as the field.

A data point (data point) is conceptually similar to a row (row) or a record (record).

A timestamp (timestamp) may be used for marking a time point of a data point. A manner of generating the timestamp is not limited in this application. For example, the timestamp may be a time point at which data is collected, or may be a time point at which data is stored in a database, or may be a time point at which the database receives a data point.

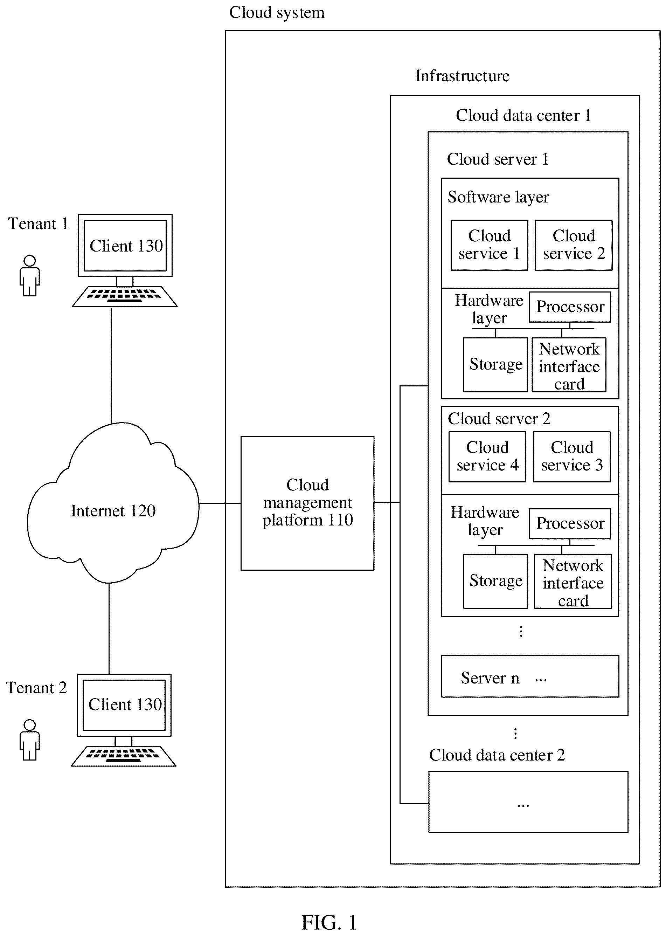

FIG. 1 is a diagram of a system based on a cloud server system according to an embodiment of this application.

As shown in FIG. 1, a cloud management platform 110 is configured to manage an infrastructure that provides a plurality of cloud services. The infrastructure includes a plurality of cloud data centers, each cloud data center includes a plurality of cloud servers, and each cloud server includes a cloud service resource to provide a corresponding cloud service for a tenant. For example, a cloud server resource may be a cloud database.

The cloud management platform 110 provides an access interface (for example, an interface or an application programming interface (application programming interface, API)). The tenant can operate a client to remotely access the access interface to register a cloud account and enter a password on the cloud management platform and log in to the cloud management platform. After the cloud account and the password are successfully authenticated by the cloud management platform, the tenant can further pay on the cloud management platform to select and purchase a virtual machine with a specific specification (a processor, a memory, or a disk). After the purchase with payment is successful, the cloud management platform provides a remote login account and password of the purchased virtual machine, and the client can remotely log in to the virtual machine, and install and run an application of the tenant on the virtual machine. The tenant of the cloud service may be an individual, an enterprise, a school, a hospital, an administrative agency, or the like.

Functions of the cloud management platform 110 include, but are not limited to, a user console, a computing management service, a network management service, a storage management service, an authentication service, and an image management service. The user console provides an interface or an API to interact with the tenant. The computing management service is used for managing a bare metal server and a server running a virtual machine and a container. The network management service is used for managing a network service (for example, a gateway and a firewall). The storage management service is used for managing a storage service (for example, a data bucket service). The authentication service is used for managing the account and the password of the tenant. The image management service is used for managing a virtual machine image. The tenant may log in to the cloud management platform 110 by using the client 130 over an internet 120, to manage a leased cloud service.

The tenant may store data in the cloud data center via the cloud management platform 110, to implement the storage management service. For example, the tenant may store monitoring data (such as a temperature and pressure) of a sensor in the cloud data center.

In a scenario, for example, development operation (development operation, DevOps) or an IoT (internet of things, IoT), a user is more sensitive to recent data and tends to perform a complete data query only on the recent data. For old data, the user usually queries a data trend, that is, queries sampled data. Therefore, the old data may be processed in a downsampling (downsampling) manner. Through downsampling, data points within a specific time interval can be aggregated into one value or one group of values according to a specific rule. Downsampling can reduce an overall amount of stored data, to further reduce computing pressure of storage and a query.

Storing data in a database may also be referred to as "writing data to a disk". Currently, downsampling is usually performed before data is written to a disk. The data is stored in a memory, and data obtained through downsampling is written to the disk after a specific time period. This leads to high memory costs.

In some technical solutions, a plurality of clusters are used for respectively storing raw data and data obtained through downsampling. However, in this solution, an amount of data that needs to be stored is greater than that of only raw data that needs to be stored, increasing maintenance costs and data storage costs.

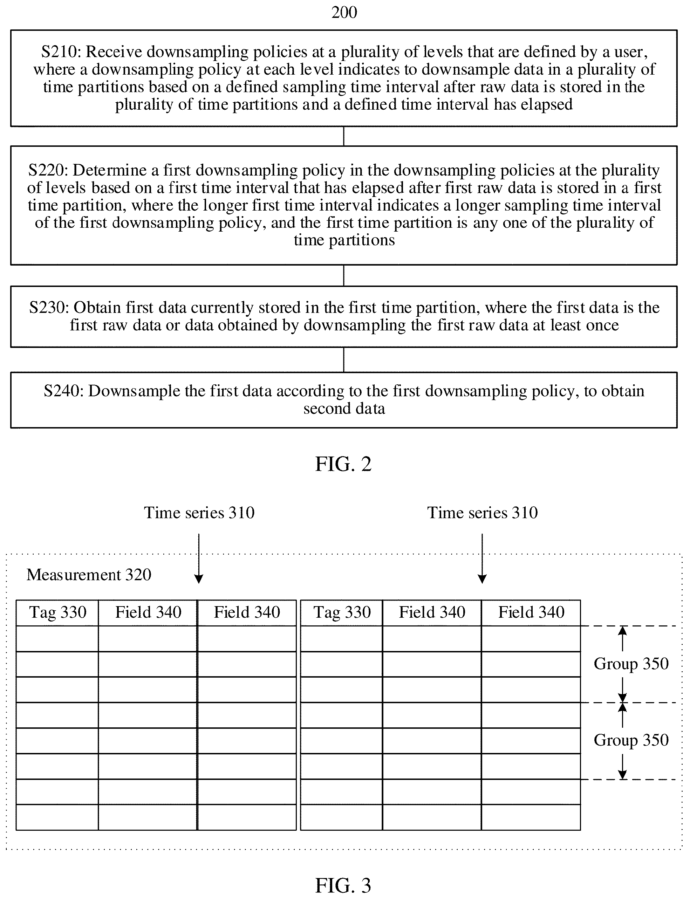

FIG. 2 is a schematic flowchart of a data downsampling method 200 according to an embodiment of this application. The method 200 can reduce memory costs during downsampling. The method 200 is applied to a database. The database includes a plurality of time shards, and the plurality of time shards are used for storing data within different time periods. A specific execution body of the method 200 is not limited in this application, and the method 200 may be performed by any device having a computing function.

In some databases, division into different time shards can be performed based on a time range. A method for division into time shards is not limited in this application. For example, a time shard may store data for one day, or may store data for one hour. For example, a time shard A stores data from September 1, and a time shard B stores data from September 22. In other words, raw data written on September 1 is stored in the time shard A, and raw data written on September 22 is stored in the time shard B.

S210: Receive downsampling policies at a plurality of levels that are defined by a user, where a downsampling policy at each level indicates to downsample data in the plurality of time shards based on a defined sampling time interval after raw data is stored in the plurality of time shards and a defined time interval has elapsed.

In some embodiments, the foregoing database may be a cloud database, and is run in a cloud data center as a cloud service. S210 may be performed by the cloud management platform 110. In this way, the cloud management platform 110 receives a downsampling task creation instruction, and delivers the downsampling task creation instruction to the cloud database.

For example, a client (client) may send an instruction to a foreground of an execution body in this embodiment of this application, and then a background of the execution body determines downsampling policies at a plurality of levels based on the instruction. In this way, the user can define a downsampling policy.

Specific content of the instruction is not limited in this application, and the instruction is within the scope of this application provided that the instruction can indicate a downsampling policy. In an example, the instruction may include downsampling policies at a plurality of levels. In this way, the execution body may parse the instruction, and extract the downsampling policies at the plurality of levels. For example, the instruction includes a time interval and a sampling time interval. In another example, the instruction may instruct the execution body to select preset downsampling policies at a plurality of levels. For example, the instruction includes an identifier of a downsampling policy, a preset downsampling policy is stored in the background of the execution body, and the execution body determines that the downsampling policy corresponding to the identifier takes effect.

For ease of clear description, the following uses an example in which the user defines downsampling policies at two levels. It is assumed that downsampling policies at a plurality of levels are as follows: For any time shard, starting from time when raw data is stored in the time shard, after 7 days, first-level downsampling with a sampling time interval of 5 minutes is performed, that is, one data point is sampled from the raw data every 5 minutes; starting from time when raw data is stored in the time shard, after 28 days, second-level downsampling with a sampling time interval of 60 minutes is performed, that is, one data point is sampled from the raw data every 60 minutes. The foregoing is merely an example. A person skilled in the art may understand that the downsampling policy at the plurality of levels may alternatively be in another form.

S220: Determine a first downsampling policy in the downsampling policies at the plurality of levels based on a first time interval that has elapsed after first raw data is stored in a first time shard, where the longer first time interval indicates a longer sampling time interval of the first downsampling policy, and the first time shard is any one of the plurality of time shards.

For a time shard, starting from time when the raw data is stored in the time shard, a longer time interval that has elapsed indicates a longer sampling time interval of data in the time shard. For example, data written on September 1 is stored in a time shard A; after 7 days, on September 8, first-level downsampling is performed on the data in the time shard A based on a sampling time interval of 5 minutes; and after 28 days, on September 29, second-level downsampling is performed on data in the time shard A based on a sampling time interval of 60 minutes. It should be noted that, on September 29, data obtained through downsampling on September 8 is further downsampled. After 365 days, on September 1 of the next year, data in the time shard A is deleted.

In a possible embodiment, according to a resource pool scheduling policy, a storage node downsamples, according to a corresponding downsampling policy at a moment when a service is idle, each time shard in which downsampling needs to be performed. In comparison with a time point at which downsampling is performed, longer time for storing raw data in a time shard indicates a longer sampling time interval of the data in the time shard. In other words, for different time shards, downsampling may be performed based on different sampling time intervals. For example, it is assumed that, according to a resource pool scheduling policy, one downsampling task is performed every 3 days, one downsampling task includes multi-level downsampling, time points at which two adjacent downsampling tasks are performed are September 26 and September 29 respectively, data from September 22 and data from September 21 are respectively stored in a time shard B and a time shard C, and data from September 1 and data from August 31 are respectively stored in a time shard A and a time shard D. In this case, when downsampling is performed on September 29, more than 7 days but no more than 28 days have elapsed after raw data is written to the time shard B and the time shard C, so that first-level downsampling is performed on the data in the time shard B and the time shard C based on a sampling time interval of 5 minutes, and second-level downsampling is performed on the data in the time shard A and the time shard D based on a sampling time interval of 60 minutes.

It can be learned that downsampling policies at a plurality of levels may be generated by using a simple instruction by the user. Each of the downsampling policies at the plurality of levels corresponds to one time shard or some time shards.

The raw data written to the first time shard is referred to as the first raw data. The first time interval is a time interval between a time point at which the raw data is written to the first time shard and a time point at which downsampling is performed. The first downsampling policy is a downsampling policy corresponding to the first time interval. For example, assuming that current time is September 29, and the first time shard is the time shard A (raw data is written on September 1), the first time interval is 28 days, and the corresponding first downsampling policy is to perform downsampling based on a sampling time interval of 60 minutes.

S230: Obtain first data currently stored in the first time shard, where the first data is the first raw data or data obtained by downsampling the first raw data at least once.

The first data is any data in the first time shard. It should be understood that, obtaining the first data currently stored in the first time shard indicates that the first data has been "written to a disk" in the first time shard. In other words, the first data is not stored in a memory, but is stored in the first time shard in the database. The first data may be raw data, or may be data that is downsampled once, or may be data that is downsampled for a plurality of times. That is, according to the method 200, data obtained through downsampling may be further downsampled.

The method 200 provided in this embodiment of this application may be applied to any database that is compatible with a time shard. For example, the method 200 may be applied to a time series database (time series database, TSDB), a relational database (relational database), or a non-relational database. For another example, the method 200 may be applied to a log database.

S240: Downsample the first data according to the first downsampling policy, to obtain second data.

The second data is data obtained by downsampling the first data. For example, it is assumed that data written to the time shard A on September 1 is the first data, and first-level downsampling needs to be performed on the first data on September 8. That is, based on a sampling time interval of 5 minutes, the first data is downsampled every 5 minutes. For example, it is assumed that one data point is written every 1 minute, and there are 5 data points in 5 minutes. First-level downsampling may be performed to aggregate every 5 data points into one data point, and a plurality of aggregated data points form the second data.

In some embodiments, the downsampling the first data according to the first downsampling policy, to obtain the second data includes: dividing the first data into a plurality of groups based on the sampling time interval of the first downsampling policy; and aggregating data in each of the plurality of groups according to an aggregation rule of the first downsampling policy, to obtain the second data.

For example, data whose timestamp is within a sampling time interval may be grouped into one group based on a timestamp of the first data. A plurality of data points (belonging to the first data) in each group are aggregated into one data point (belonging to the second data).

According to the foregoing solution, grouped aggregate compaction (aggregate compaction) is performed on the first data by using the first downsampling policy, so that the first data is downsampled, and disk storage space is released, to increase a processing speed of the database.

In some embodiments, the second data includes at least one of a minimum value (min), a maximum value (max), a sum (sum), a quantity of data points (count), an average value (mean), a value of an earliest input data point (first), or a value of a latest input data point (last) of data in each group in the first data.

According to the foregoing solution, the first data is downsampled by using the first downsampling policy, to obtain the second data. The second data includes at least one aggregated value. Therefore, the second data can reflect a change trend of the raw data, so that the change trend of the raw data can be reconstructed while saving disk storage space, to improve downsampling accuracy.

In some embodiments, each group in the first data includes a plurality of time series, and each time series includes a plurality of fields. Aggregating data in each of the plurality of groups includes: sequentially traversing each of the plurality of fields in each time series, and aggregating, for each field, data corresponding to each group.

FIG. 3 is a diagram of data aggregation according to an embodiment of this application. The following describes the foregoing solution with reference to FIG. 3.

A time series (time series) 310 indicates a change of an indicator over time. A combination of a measurement (measurement, MST) 320, a tag (tag) 330, and a field (field) 340 forms a time series.

The MST 320 is conceptually similar to a table (table), and the MST 320 represents a set of data of a same type. For example, the MST 320 may be established for an environmental sensor, and the MST 320 is used for storing all monitoring data of the environmental sensor.

The tag 330 may describe a feature of data, and the tag 330 is stable and generally does not change over time. For example, information such as an identifier of the environmental sensor and an area in which the environmental sensor is located may be used as the tag 330.

The field 340 is conceptually similar to a column (column). The field 340 may describe a measurement indicator of data, and usually changes over time. For example, data such as a temperature, humidity, and pressure detected by the environmental sensor may be referred to as the field 340.

In addition to having the tag 330 and the field 340, a data point may further have a timestamp (not shown in the figure). Data whose timestamp is within one time interval may be grouped into a group 350.

In this way, each group 350 has a plurality of time series 310, and each time series 310 has a plurality of fields 340.

In some embodiments, a time series identifier may be assigned to each time series 310, and there is a value relationship between time series identifiers. When data in each group 350 is aggregated, aggregation may be first performed on a first field 340 of a time series 350 with the smallest time series identifier. It should be noted that "aggregation" herein is aggregation performed in the group 350, and each group 350 includes a plurality of data points before the aggregation and includes one data point after the aggregation. Subsequently, a second field 340 is aggregated until all fields 340 in the time series 350 with the smallest time series identifier are aggregated. Then, the foregoing traversing operation is performed on a time series 350 with the second smallest time series identifier, so that each of the plurality of fields 340 in each time series 350 is sequentially traversed, and for each field 340, data corresponding to each group 350 is aggregated.

According to the foregoing solution, the first data is aggregated in a sequential traversal manner. In comparison with random reading, the method provided in this embodiment of this application reduces memory overheads. Refer to FIG. 2. In this embodiment of this application, the user may set a downsampling policy based on a requirement of the user, to improve downsampling applicability. In addition, the user only needs to give an instruction, and maintenance and scheduling are automatically performed in a background, to reduce operation and maintenance costs of the user. In this way, when downsampling policies at more levels need to be set, according to the data downsampling method provided in this embodiment of this application, a database storage service can be conveniently constructed. In addition, in the foregoing solution, downsampling is performed after data is written to a database, to save memory storage space. In addition, in the foregoing solution, multi-level downsampling may be performed, that is, further downsampling is performed based on data obtained through downsampling.

In some embodiments, the method 200 includes: storing the second data in the first time shard, and deleting the first data.

In the data downsampling method provided in this embodiment of this application, multi-level downsampling may be further performed, and data that is not downsampled is replaced with data obtained through downsampling. A same database may store data obtained through different levels of downsampling. This greatly saves disk storage space while ensuring that the data obtained through downsampling can reconstruct a change trend of raw data, to increase a processing speed of the database.

In some embodiments, before S210, the method 200 further includes: receiving the first raw data, and generating a timestamp of the first raw data; and storing the first raw data in the first time shard based on the timestamp.

The foregoing solution may be understood as a process in which raw data is written to a database.

In some embodiments, there is an integer multiple relationship between a plurality of sampling time intervals corresponding to the downsampling policies at the plurality of levels.

The integer multiple relationship between the sampling time intervals of the downsampling policies can improve downsampling accuracy. "Accuracy" may be understood as that, although an amount of data obtained through downsampling is reduced, reconstruction of a data trend before downsampling is not affected.

For example, according to the downsampling policies at the plurality of levels, data in a time shard to which raw data is written within 7 days is downsampled once based on a sampling time interval of 15 minutes, and data in a time shard to which raw data is written more than 7 days and within 28 days is downsampled once based on a sampling time interval of 60 minutes. 60 is an integer multiple of 15.

In this way, as time elapses, when the time shard to which the raw data is written within 7 days becomes the time shard to which the raw data is written more than 7 days and within 28 days, only four 15-minute data points need to be aggregated into one 60-minute data point. For example, a minimum value, a maximum value, a sum, a count of data points, an average value, a value of an earliest input data point, and a value of a latest input data point are obtained from the four 15-minute data points, and these obtained aggregated values are used as one 60-minute data point.

According to the foregoing solution, there is an integer multiple relationship between the plurality of sampling time intervals corresponding to the downsampling policies at the plurality of levels. When data obtained through downsampling is further downsampled, aggregation may be performed based on the integer multiple relationship. A processing process of the method provided in this embodiment of this application is simple, and downsampling efficiency can be improved.

It should be noted that, in this application, there is no limitation that an integer multiple relationship is necessary between the plurality of sampling time intervals corresponding to the plurality of downsampling policies. For example, the plurality of downsampling policies may alternatively be to sample, every 3 minutes, data in a time shard to which raw data is written within 7 days, and sample, every 5 minutes, data in a time shard to which raw data is written within 28 days. In this way, when the time shard to which the raw data is written within 7 days becomes the time shard to which the raw data is written within 28 days, five 3-minute data points may be aggregated into three 5-minute data points. Clearly, if there is no integer multiple relationship between the plurality of sampling time intervals corresponding to the plurality of downsampling policies, the data downsampling method provided in this embodiment of this application can also be implemented. However, in the foregoing solution, in an aggregation process, averaging or weighted averaging may need to be performed on a plurality of data points that have been downsampled, or trend fitting may be performed by considering more 3-minute data points. Consequently, data accuracy after further downsampling is low.

It should be noted that, the foregoing only uses downsampling policies at two levels as an example. A person skilled in the art may understand that there may be downsampling policies at more levels. For example, a first-level downsampling policy may be to downsample, based on a sampling time interval of 5 minutes, data in a time shard to which raw data is written more than 3 days and within 30 days, a second-level downsampling policy may be to downsample, based on a sampling time interval of 15 minutes, data in a time shard to which raw data is written more than 30 days and within 90 days, and a third-level downsampling policy may be to downsample, based on a sampling time interval of 60 minutes, data in a time shard to which raw data is written more than 90 days.

According to the method provided in this embodiment of this application, "multi-level" downsampling is implemented. In comparison with "single-level" downsampling, multi-level downsampling further releases disk storage space, to increase a processing speed of a database.

In some embodiments, for the foregoing solution of "replacing data that is not downsampled with data obtained through downsampling", a transaction (transaction) may be first started for the first time shard, to avoid performing a read/write operation on the first time shard. An event of a file corresponding to the first data is written to a log, and a rename operation is performed on the file, so that the file corresponding to the first data is invisible to the user. Then, an event of a file corresponding to the second data is written to a log, and a rename operation is performed on the file, so that the file corresponding to the second data is visible to the user. Finally, the file corresponding to the first data is deleted, and the transaction ends, to restore reading and writing on the first time shard.

In this way, if an exception occurs during execution of the foregoing solution, after the database is restarted, the current log may be replayed. In the database, remaining operations in the foregoing solution may be performed based on a state of the current end event.

Data obtained through downsampling according to different downsampling policies may alternatively be respectively stored in a plurality of clusters. However, in this solution, a downsampling policy at each added level requires more storage space to be occupied, and the user needs to rewrite code related to database storage. In addition, the clusters need to interact with each other (for example, a cluster B obtains data of a cluster A for downsampling). This reduces downsampling efficiency.

According to the data downsampling method provided in this embodiment of this application, downsampling can be performed after data is written to a database, to save memory storage space. In addition, in the data downsampling method provided in this embodiment of this application, multi-level downsampling may be further performed, and data that is not downsampled is replaced with data obtained through downsampling. In comparison with a solution of storing all data, disk storage space can be saved, and a processing speed of the database can be increased. In addition, when downsampling policies at more levels need to be set, based on the data downsampling method provided in this embodiment of this application, a database storage service can be conveniently constructed, and disk storage space can be further reduced.

The following further describes method embodiments of this application with reference to an example architecture of a database.

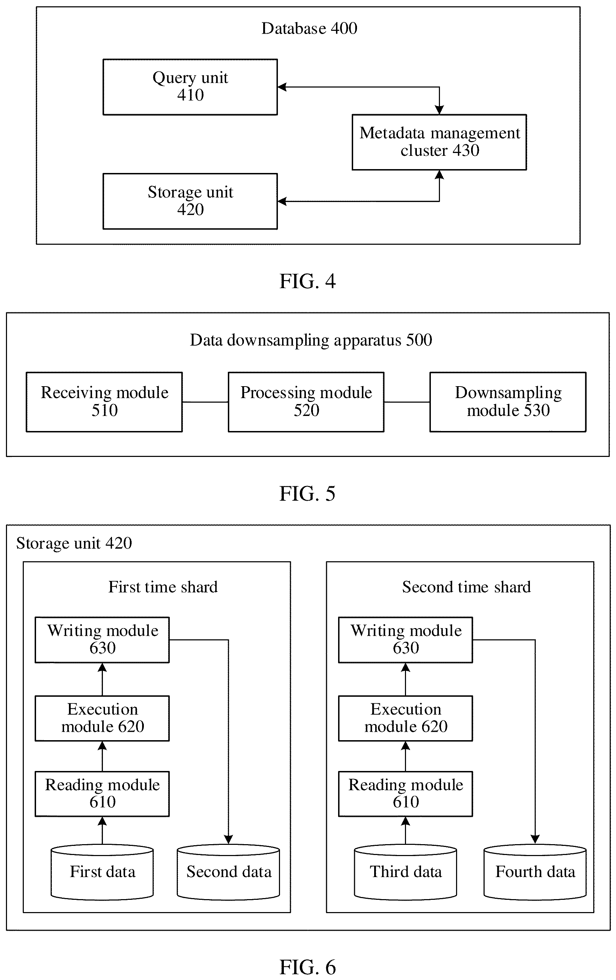

FIG. 4 is a block diagram of a database 400 according to an embodiment of this application. It should be noted that an architecture of the database 400 is merely an example, and does not constitute a limitation on this application.

The database 400 may include a query unit 410, a storage unit 420, and a metadata management cluster 430. The query unit 410 and the storage unit 420 may be distributed in a plurality of nodes (nodes). The metadata management cluster 430 may manage a state of each node and a downsampling policy.

The query unit 410 may include a structured query language (structured query language, SQL) parser (parser), a semantic analyzer (semantic analyzer), an optimizer (optimizer), a runtime (runtime) instruction library, and the like.

The SQL parser and the semantic analyzer may parse an SQL statement written by a user and compile the SQL statement into an executable instruction. The optimizer may be used for query optimization, for example, logical (logical) optimization or physical (physical) optimization. The runtime instruction library is used for providing some code when a computer program runs.

The storage unit 420 may include a parser, a directed acyclic graph (directed acyclic graph, DAG) generator, a chunk (chunk) reader, a data interface, a data storage area, and the like.

One time shard has a separate chunk reader, data interface, and data storage area. The chunk reader may read a data file in the data storage area through the data interface.

The metadata management cluster 430 may manage the downsampling policy, and a user may maintain the downsampling policy by using an instruction. A level of the downsampling policy corresponds to a level of a retention policy (retention policy, RP).

There may be a plurality of data points in an MST, one RP may correspond to a plurality of MSTs, and there may be a plurality of RPs in one database. In other words, the downsampling policy may correspond to the plurality of MSTs.

The downsampling policy can be implemented based on original RP information in the database. The original RP information includes names and types of MSTs and fields. The original RP information further includes retention duration (duration). The retention duration specifies expiration time of data. If retention duration of a data point expires, the data point is deleted. A set of aggregators (calls) may be added to downsampled data based on the original RP information. The set of aggregators includes a type of a field and a name of an aggregation operation performed on the field.

The storage unit 420 may periodically send a request to the metadata management cluster 430, to determine a time shard in which downsampling needs to be performed, obtain an updated downsampling policy, and then generate a DAG task according to the downsampling policy. The data file can be downsampled based on the DAG task, and then the data file that is not downsampled is replaced with a data file obtained through downsampling.

Specifically, before sending a request to the metadata management cluster 430, a node timer of the storage unit 420 may set a state of a downsampling policy stored in an engine (engine) of the storage unit 420 to inactive. The engine may be configured to execute the DAG task in the storage unit 420.

After the storage unit 420 obtains the downsampling policy from the metadata management cluster 430, if the downsampling policy is already in the engine of the storage unit 420, a state of the downsampling policy may be set to active. If the downsampling policy is not in the engine of the storage unit 420, the downsampling policy may be first input into the DAG generator, and the DAG generator may create an MST-level query mode (schema) and a DAG task based on information about the MST and the field of the downsampling policy. Then, the downsampling policy is added to a map (map) of the engine, and a state of the downsampling policy is set to active.

After obtaining all downsampling policies, the storage unit 420 starts to execute the DAG task.

FIG. 5 is a block diagram of a data downsampling apparatus 500 according to an embodiment of this application. The data downsampling apparatus 500 includes a receiving module 510, a processing module 520, and a downsampling module 530. For embodiments of the foregoing three modules, refer to the following descriptions. Details are not described herein. The downsampling module 530 includes a reading module 610, an execution module 620, and a writing module 630.

The downsampling module 530 may be configured to execute a DAG task. The DAG task includes three operations: obtaining data, downsampling the data, and writing a new file. The reading module 610 may perform the operation of obtaining the data, the execution module 620 may perform the operation of downsampling the data, and the writing module 630 may perform the operation of writing the new file.

FIG. 6 is a diagram of a data downsampling method 200 according to an embodiment of this application.

Refer FIG. 6. One DAG task may correspond to one time shard, and operations may be performed concurrently between DAG tasks. That is, when one DAG task obtains first data, another DAG task may downsample third data. Therefore, the reading module 610, the execution module 620, and the writing module 630 may also operate in parallel. In some embodiments, when the reading module 610 reads the first data, the execution module 620 may downsample data in another time shard. In some other embodiments, the reading module 610 may simultaneously read the first data and data in another time shard.

It should be noted that the storage unit 420 in FIG. 6 may be any node of the storage unit 420. A first time shard and a second time shard may be located in one node of the storage unit 420, or may be located in different nodes of the storage unit 420. The reading module 610, the execution module 620, and the writing module 630 may be located in one node of the storage unit 420, or may be located in different nodes of the storage unit 420.

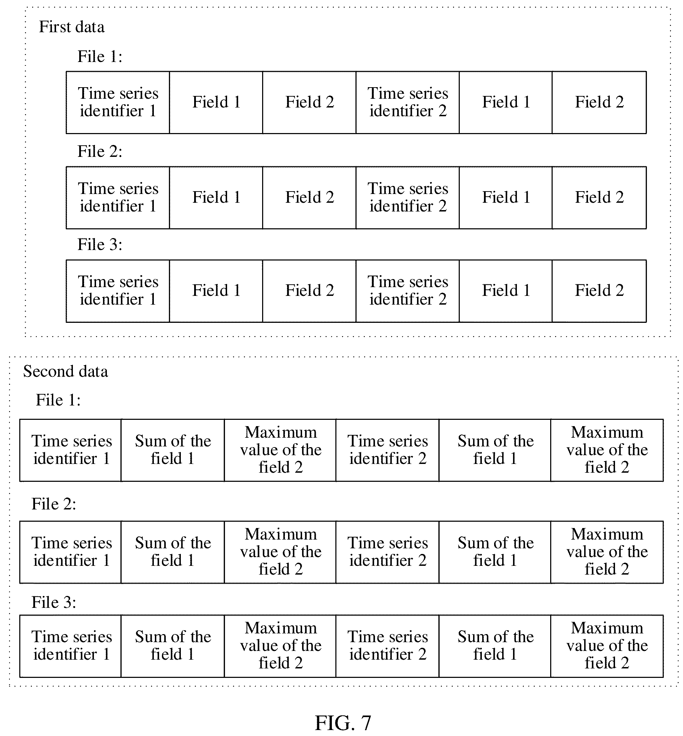

FIG. 7 is a diagram of first data and second data according to an embodiment of this application. FIG. 7 is merely an example, and does not constitute a limitation on this application.

An upper part in FIG. 7 is a diagram of the first data. The first data may include three files: a file 1, a file 2, and a file 3. Each file includes a plurality of time series. A time series identifier 1 is an identifier of a time series 1, and the time series 1 includes a field 1 and a field 2. A time series identifier 2 is an identifier of a time series 2, and the time series 2 includes a field 1 and a field 2.

A lower part in FIG. 7 is a diagram of the second data. The second data includes three files: a file 1, a file 2, and a file 3. The three files in the second data are respectively obtained by downsampling the three files in the first data. Fields may be aggregated based on a sampling time interval of a downsampling policy.

For example, a field 1 may be aggregated through summation, and a field 2 may be aggregated by taking a maximum value.

It may be understood that, more types of aggregation operations may be performed on the fields. For example, a plurality of pieces of data in the field 1 may alternatively be aggregated by taking a minimum value, taking a maximum value, obtaining a quantity of data points, obtaining an average value, taking a value of an earliest input data point, and/or taking a value of a latest input data point. In this case, more aggregated values may be stored at a position of "sum of the field 1" in the lower part in FIG. 7.

The following describes syntax of the data downsampling method provided in this application in an implementation. The following syntax is merely an example, and does not constitute a limitation on this application.

In a possible embodiment, the foregoing method may be implemented by using an RP. For example, when creating a downsampling policy, a user can define an RP of a database to which the downsampling policy is applied. For example, a database name and an RP name may be entered. Retention duration (duration) may be defined. For example, if the retention duration is 7 days, data in each measurement of the downsampling policy expires 7 days later.

When creating the downsampling policy, the user may further define a sample interval (sample interval). For example, if the sample interval is (1 day, 2 days), it indicates that corresponding first-level downsampling is performed 1 day later. Corresponding second-level downsampling is performed 2 days later. A sampling time interval (time interval) may be defined. For example, if the sampling time interval is (1 minute, 3 minutes), it indicates that a sampling time interval of the first-level downsampling is 1 minute, and a sampling time interval of the second-level downsampling is 3 minutes.

The sample interval corresponds to the sampling time interval. Based on a quantity of levels of downsampling policies included in a sample interval, a sampling time interval of a downsampling policy at each level in these downsampling levels needs to be specified.

In some embodiments, there is an integer multiple relationship between a plurality of sampling time intervals corresponding to a plurality of downsampling policies. In the foregoing syntax, it may be understood that values in a bracket that define a sampling time interval are in an integer multiple relationship. For example, the sampling time interval may be defined as (2 minutes, 8 minutes, 40 minutes).

When creating the downsampling policy, the user may further define a field, a data type (data type), and a corresponding aggregator (aggregator) that need to be aggregated.

In some embodiments, the user may show (show) the downsampling policy by using an instruction.

In some embodiments, the user may delete (drop) the downsampling policy by using an instruction.

Some embodiments of database storage are described above. Some embodiments of a database query are described in detail in the following.

Assuming that there are downsampling policies at two levels, and with reference to the foregoing syntax, retention duration is defined as 365 days, a sample interval is defined as (7 days, 28 days), and a sampling time interval is defined as (15 minutes, 60 minutes). In this way, for a time shard, starting from writing raw data into the time shard, when the time shard has passed 7 days and does not exceed 28 days, data in the time shard may be downsampled based on a sampling time interval of 15 minutes; when the time shard has passed 28 days and does not exceed 365 days, data in the time shard may be downsampled based on a sampling time interval of 60 minutes; and when the time shard has passed 365 days, data in the time shard may be deleted.

In some embodiments, the method 200 further includes: receiving a query instruction, where the query instruction is used for querying a first aggregation result obtained by aggregating second raw data in a second time shard according to a first aggregation rule, the second time shard is any one of the plurality of time shards, and data currently stored in the second time shard is obtained by aggregating the second raw data according to at least one aggregation rule; determining a second aggregation rule according to the first aggregation rule and the at least one aggregation rule; and aggregating, according to the second aggregation rule, the data currently stored in the second time shard, to obtain the first aggregation result.

The second time shard may be the same as the first time shard, or may be different from the first time shard. The second raw data is raw data written to the second time shard. The first aggregation rule is one of the foregoing aggregation rules. For example, the first aggregation rule may be count. The following uses an example in which the first aggregation rule is count for description.

When the user performs a query, for a time shard in which downsampling has been performed, the storage unit 420 may rewrite a query statement based on the time shard, to feed back a correct query result to the user.

For example, assuming that the user expects to query data in the last 90 days and the data is grouped into one group every 60 minutes, a quantity of data points in each group (count) is returned to the user.

In this embodiment of this application, an instruction sent by the user may be rewritten, and different aggregation operations are performed on different time shards. Specifically, for a time shard to which raw data is written within 7 days, downsampling is not performed, so that the raw data in the time shard may be aggregated, the raw data is grouped into one group every 60 minutes, and a quantity of data points in each group is counted, to obtain an aggregated count value. For data in a second time shard to which raw data is written more than 7 days but no more than 28 days, first-level downsampling has already been performed on the data, that is, the raw data has been aggregated according to at least one aggregation rule (for example, count, sum, and means), each data point includes a first aggregated count value of 15 minutes (for example, there is one data point of the raw data every minute, and after aggregation is performed according to the at least one aggregation rule, the first aggregated count value of each data point is 15). Therefore, when the at least one aggregation rule includes "count" and the first aggregation rule is "count", a second aggregation rule may be determined as "sum". Specifically, every four data points may be grouped into one group, and first aggregated count values included in each group of four data points are summed (a sum is obtained) to obtain a second aggregated count value (for example, there is one data point of raw data every minute, and four first count values of the second aggregated count value are summed to obtain a second aggregated count value of 60). For data in a time shard to which raw data is written more than 28 days but no more than 90 days, second-level downsampling has been performed on the data, and each data point exactly includes a quantity of 60-minute data points, so that an aggregated count value included in each data point may be extracted. Then, the aggregated count values obtained in the foregoing three time shards are returned to the user.

If a full query is used, data in a time shard to which raw data is written more than 7 days but no more than 28 days and data in a time shard to which raw data is written more than 28 days but no more than 90 days still need to be aggregated. According to a query statement rewriting solution provided in this application, simpler processing may be performed on data obtained through downsampling, to save computing resources.

Data obtained through downsampling according to different downsampling policies may alternatively be respectively stored in a plurality of clusters. However, in this solution, for a downsampling policy at each additional level, the user needs to rewrite query code. In addition, for the downsampling policy at each additional level, a materialized view (materialized view) needs to be added. Consequently, storage space is further occupied.

According to the foregoing query statement rewriting solution, the user does not need to modify the query statement, and it is convenient for the user to construct storage and query services of the database. The user is unaware of the processing during a query, so that user experience is improved. In addition, in the foregoing query statement rewriting solution, occupation of the materialized view is reduced, so that storage space is further saved.

According to the method 200 and the query rewriting solution provided in embodiments of this application, more than 90% computing resources and storage resources can be saved.

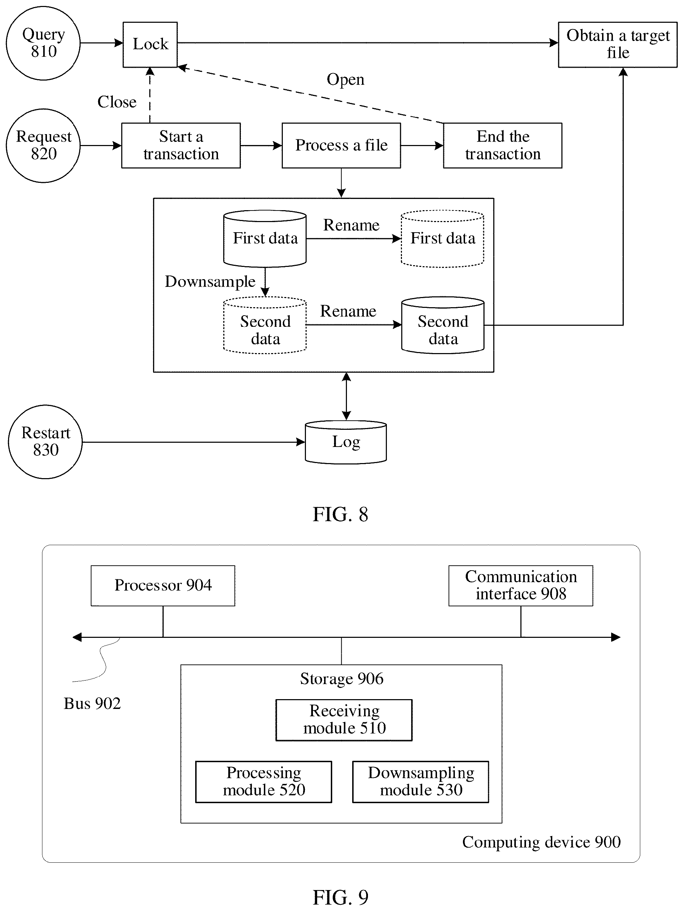

FIG. 8 is a diagram of data downsampling and a query according to an embodiment of this application.

Refer to FIG. 8. If a user expects to perform a query operation 810, when a lock is open, the user may obtain a target file.

A request 820 may be sent by the storage unit 420 to an RP. When receiving the request 820, the RP may start a transaction for an MST corresponding to the RP. In this case, the lock is closed, and the user cannot query the MST corresponding to the RP. Then, the MST corresponding to the RP is processed, second data is obtained by downsampling first data. A file of the first data is renamed, so that the first data is invisible. A file of the second data is renamed, so that the second data is visible. After the files are processed, the transaction ends and the lock is open. After that, if the user expects to perform the query operation 810, the file of the second data may be found.

A file processing process is saved in logs. If a fault occurs, a restart operation 830 may be triggered. For example, files that are not processed completely may be deleted based on the logs, and the files are to be processed again.

The foregoing describes in detail the method embodiments of this application. The following describes apparatus embodiments in embodiments of this application with reference to FIG. 5 and FIG. 9 to FIG. 11. The apparatus embodiments correspond to the method embodiments. Therefore, for parts that are not described in detail, refer to the foregoing method embodiments. The apparatus may implement any one of the possible implementations of the foregoing method.

Still refer to FIG. 5. The data downsampling apparatus 500 includes: a receiving module 510, configured to receive downsampling policies at a plurality of levels that are defined by a user, where a downsampling policy at each level indicates to downsample data in a plurality of time shards based on a defined sampling time interval after raw data is stored in the plurality of time shards and a defined time interval has elapsed; a processing module 520, configured to determine a first downsampling policy in the downsampling policies at the plurality of levels based on a first time interval that has elapsed after first raw data is stored in a first time shard, where the longer first time interval indicates a longer sampling time interval of the first downsampling policy, and the first time shard is any one of the plurality of time shards; and a downsampling module 530, configured to: obtain first data currently stored in the first time shard, where the first data is the first raw data or data obtained by downsampling the first raw data at least once; and downsample the first data according to the first downsampling policy, to obtain second data.

In a possible embodiment, the downsampling module 530 is further configured to: store the second data in the first time shard, and delete the first data.

In a possible embodiment, the receiving module 510 is further configured to: receive first raw data, and generate a timestamp of the first raw data; and store the first raw data in the first time shard based on the timestamp.

In a possible embodiment, the receiving module 510 is further configured to: receive a query instruction, where the query instruction is used for querying a first aggregation result obtained by aggregating second raw data in a second time shard according to a first aggregation rule, the second time shard is any one of the plurality of time shards, and data currently stored in the second time shard is obtained by aggregating the second raw data according to at least one aggregation rule; determine a second aggregation rule according to the first aggregation rule and the at least one aggregation rule; and aggregate, according to the second aggregation rule, the data currently stored in the second time shard, to obtain the first aggregation result.

Specifically, for specific implementations of various operations in the data downsampling method performed by the data downsampling apparatus 500, refer to descriptions of related content in the foregoing method embodiments. Details are not described herein again.

The receiving module 510, the processing module 520, and the downsampling module 530 may all be implemented by using software or hardware. For example, the following uses the receiving module 510 as an example to describe an implementation of the receiving module 510. Similarly, for implementations of the processing module 520 and the downsampling module 530, refer to the implementation of the receiving module 510.

A module is used as an example of a software functional unit, and the receiving module 510 may include code that is run on a computing instance. The computing instance may include at least one of a physical host (computing device), a virtual machine, or a container. Further, there may be one or more computing instances. For example, the receiving module 510 may include code that is run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be disposed in each VPC for communication between two VPCs in a same region or cross-region communication between VPCs in different regions. An interconnection between VPCs is implemented through the communication gateway.

A module is used as an example of a hardware functional unit, and the receiving module 510 may include at least one computing device, for example, a server. Alternatively, the receiving module 510 may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field programmable gate array (field programmable gate array, FPGA), generic array logic (generic array logic, GAL), or any combination thereof.

A plurality of computing devices included in the receiving module 510 may be distributed in a same region, or may be distributed in different regions. A plurality of computing devices included in the receiving module 510 may be distributed in a same AZ, or may be distributed in different AZs. Similarly, a plurality of computing devices included in the receiving module 510 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the receiving module 510 may be configured to perform any step in the data downsampling method, the processing module 520 may be configured to perform any step in the data downsampling method, the downsampling module 530 may be configured to perform any step in the data downsampling method, steps that the receiving module 510, the processing module 520, and the downsampling module 530 are responsible for implementing may be specified as required, and the receiving module 510, the processing module 520, and the downsampling module 530 respectively implement different steps in the data downsampling method to implement all functions of the data downsampling apparatus 500.

This application further provides a computing device 900. As shown in FIG. 9, the computing device 900 includes a bus 902, a processor 904, a storage 906, and a communication interface 908. The processor 904, the storage 906, and the communication interface 908 communicate with each other through the bus 902. The computing device 900 may be a server or a terminal device. It should be understood that quantities of processors and storages in the computing device 900 are not limited in this application.

The bus 902 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 9. However, this does not indicate that there is only one bus or only one type of bus. The bus 902 may include a path for transferring information between various components (for example, the storage 906, the processor 904, and the communication interface 908) of the computing device 900.

The processor 904 may include any one or more of processors, such as a central processing unit (central processing unit, CPU), a graphics processing unit (graphics processing unit, GPU), a microprocessor (microprocessor, MP), or a digital signal processor (digital signal processor, DSP).

The storage 906 may include a volatile memory (volatile memory), for example, a random access memory (random access memory, RAM). The storage 906 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 906 stores executable program code, and the processor 904 executes the executable program code to implement functions of the receiving module 510, the processing module 520, and the downsampling module 530 respectively, so as to implement the data downsampling method. In other words, the storage 906 stores instructions for performing the data downsampling method.

The communication interface 908 implements communication between the computing device 900 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

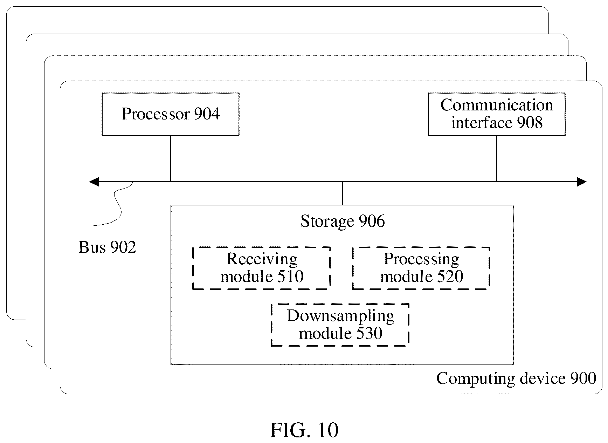

As shown in FIG. 10, the computing device cluster includes at least one computing device 900. A storage 906 in one or more computing devices 900 in the computing device cluster may store same instructions for performing the data downsampling method.

In some embodiments, the storage 906 in the one or more computing devices 900 in the computing device cluster may alternatively store some instructions for performing the data downsampling method separately. In other words, a combination of the one or more computing devices 900 may jointly execute the instructions for performing the data downsampling method.

It should be noted that storages 906 in different computing devices 900 in the computing device cluster may store different instructions respectively for performing some functions of the data downsampling apparatus 500. In other words, instructions stored in the storages 906 in the different computing devices 900 may be used for implementing functions of one or more of the receiving module 510, the processing module 520, and the downsampling module 530.

In some embodiments, one or more computing devices in the computing device cluster may be connected through a network. The network may be a wide area network, a local area network, or the like.

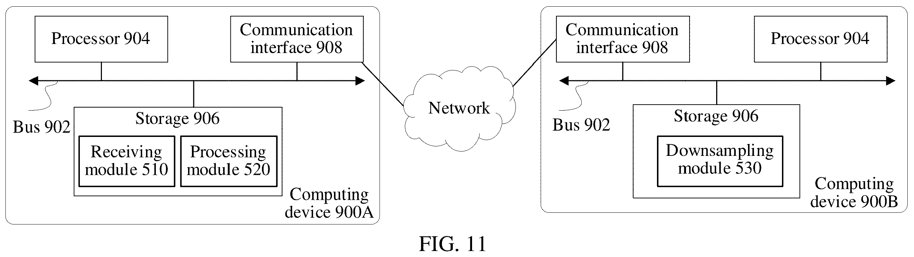

FIG. 11 shows a possible implementation. As shown in FIG. 11, two computing devices 900A and 900B are connected through a network. Specifically, each computing device is connected to the network through a communication interface in the computing device. In this type of possible implementation, a storage 906 in the computing device 900A stores instructions for performing functions of the receiving module 510 and the processing module 520. In addition, a storage 906 in the computing device 900B stores instructions for performing functions of the downsampling module 530.

A connection manner between computing device clusters shown in FIG. 11 may be configured in such a manner that, in consideration of the data downsampling method provided in this application in which extensive multi-level downsampling needs to be performed, it is considered that functions implemented by the processing module 520 are performed by the computing device 900B.

It should be understood that functions of the computing device 900A shown in FIG. 11 may alternatively be completed by a plurality of computing devices 900. Similarly, functions of the computing device 900B may alternatively be completed by a plurality of computing devices 900.

In some embodiments, the storage 906 in the one or more computing devices 900 in the computing device cluster may alternatively store some instructions for performing the data downsampling method separately. In other words, a combination of the one or more computing devices 900 may jointly execute the instructions for performing the data downsampling method.

An embodiment of this application further provides a computer program product including instructions. The computer program product may be software or a program product that includes the instructions and that can run on a computing device or be stored in any usable medium. When the computer program product runs on at least one computing device, the at least one computing device is caused to perform the foregoing data downsampling method.

An embodiment of this application further provides a computer-readable storage medium. The computer-readable storage medium may be any usable medium that can be stored in a computing device, or a data storage device like a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct a computing device to perform the foregoing data downsampling method.

A person of ordinary skill in the art may be aware that, in combination with the examples described in embodiments disclosed in this specification, units and algorithm steps can be implemented by electronic hardware or a combination of computer software and electronic hardware. Whether such functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in the form of a software product. The computer software product is stored in a storage medium, and includes a plurality of instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data downsampling method, wherein the method is applied to a database, the database comprises a plurality of time shards, the plurality of time shards are used for storing data within different time periods, and the method comprises:
receiving downsampling policies at a plurality of levels that are defined by a user, wherein a downsampling policy at each level indicates to downsample data in the plurality of time shards based on a defined sampling time interval after raw data is stored in the plurality of time shards and a defined time interval has elapsed;
determining a first downsampling policy in the downsampling policies at the plurality of levels based on a first time interval that has elapsed after first raw data is stored in a first time shard, wherein the longer first time interval indicates a longer sampling time interval of the first downsampling policy, and the first time shard is any one of the plurality of time shards;
obtaining first data currently stored in the first time shard, wherein the first data is the first raw data or data obtained by downsampling the first raw data at least once; and
downsampling the first data according to the first downsampling policy, to obtain second data.

2. The method according to claim 1, wherein the method further comprises:
storing the second data in the first time shard, and deleting the first data.

3. The method according to claim 1 or 2, wherein before the receiving the downsampling policies at the plurality of levels that are defined by the user, the method further comprises:
receiving the first raw data, and generating a timestamp of the first raw data; and
storing the first raw data in the first time shard based on the timestamp.

4. The method according to any one of claims 1 to 3, wherein the downsampling the first data according to the first downsampling policy, to obtain the second data comprises:
dividing the first data into a plurality of groups based on the sampling time interval of the first downsampling policy; and
aggregating data in each of the plurality of groups according to an aggregation rule of the first downsampling policy, to obtain the second data.

5. The method according to claim 4, wherein the second data comprises at least one of a minimum value, a maximum value, a sum, a quantity of data points, an average value, a value of an earliest input data point, or a value of a latest input data point of data in each group in the first data.

6. The method according to any one of claims 1 to 5, wherein the method further comprises:
receiving a query instruction, wherein the query instruction is used for querying a first aggregation result obtained by aggregating second raw data in a second time shard according to a first aggregation rule, the second time shard is any one of the plurality of time shards, and data currently stored in the second time shard is obtained by aggregating the second raw data according to at least one aggregation rule;
determining a second aggregation rule according to the first aggregation rule and the at least one aggregation rule; and
aggregating, according to the second aggregation rule, the data currently stored in the second time shard, to obtain the first aggregation result.

7. A data downsampling apparatus, wherein the apparatus is used in a database, the database comprises a plurality of time shards, the plurality of time shards are used for storing data within different time periods, and the apparatus comprises:
a receiving module, configured to receive downsampling policies at a plurality of levels that are defined by a user, wherein a downsampling policy at each level indicates to downsample data in the plurality of time shards based on a defined sampling time interval after raw data is stored in the plurality of time shards and a defined time interval has elapsed;
a processing module, configured to determine a first downsampling policy in the downsampling policies at the plurality of levels based on a first time interval that has elapsed after first raw data is stored in a first time shard, wherein the longer first time interval indicates a longer sampling time interval of the first downsampling policy, and the first time shard is any one of the plurality of time shards; and
a downsampling module, configured to: obtain first data currently stored in the first time shard, wherein the first data is the first raw data or data obtained by downsampling the first raw data at least once; and downsample the first data according to the first downsampling policy, to obtain second data.

8. The apparatus according to claim 7, wherein the downsampling module is further configured to:
store the second data in the first time shard, and delete the first data.

9. The apparatus according to claim 7 or 8, wherein the receiving module is further configured to:
receive the first raw data, and generate a timestamp of the first raw data; and
store the first raw data in the first time shard based on the timestamp.

10. The apparatus according to any one of claims 7 to 9, wherein the downsampling the first data according to the first downsampling policy, to obtain the second data comprises:
dividing the first data into a plurality of groups based on the sampling time interval of the first downsampling policy; and
aggregating data in each of the plurality of groups according to an aggregation rule of the first downsampling policy, to obtain the second data.

11. The apparatus according to claim 10, wherein the second data comprises at least one of a minimum value, a maximum value, a sum, a quantity of data points, an average value, a value of an earliest input data point, or a value of a latest input data point of data in each group in the first data.

12. The apparatus according to any one of claims 7 to 11, wherein the receiving module is further configured to:
receive a query instruction, wherein the query instruction is used for querying a first aggregation result obtained by aggregating second raw data in a second time shard according to a first aggregation rule, the second time shard is any one of the plurality of time shards, and data currently stored in the second time shard is obtained by aggregating the second raw data according to at least one aggregation rule;
determine a second aggregation rule according to the first aggregation rule and the at least one aggregation rule; and
aggregate, according to the second aggregation rule, the data currently stored in the second time shard, to obtain the first aggregation result.

13. A computing device cluster, comprising at least one computing device, wherein each computing device comprises a processor and a storage; and
the processor of the at least one computing device is configured to execute instructions stored in the storage of the at least one computing device, to cause the computing device cluster to perform the method according to any one of claims 1 to 6.

14. A computer program product comprising instructions, wherein when the instructions are run by a computing device cluster, the computing device cluster is caused to perform the method according to any one of claims 1 to 6.

15. A computer-readable storage medium, comprising computer program instructions, wherein when the computer program instructions are executed by a computing device cluster, the computing device cluster performs the method according to any one of claims 1 to 6.
